Europäisches Patentamt

European Patent Office

Office européen des brevets

(11) Publication number: **0 234 320 B1**

# EUROPEAN PATENT SPECIFICATION

(45) Date of publication of patent specification: **22.01.92**

(21) Application number: **87101224.1**

(22) Date of filing: **29.01.87**

(51) Int. Cl.5: **B29C 67/22**, B29B 9/00, C08J 9/18, //B29K23/00, B29K105/04

(54) **Process for preparing pre-expanded particles of thermoplastic resin.**

(30) Priority: **30.01.86 JP 18928/86**
**26.06.86 JP 150089/86**

(43) Date of publication of application:
**02.09.87 Bulletin 87/36**

(45) Publication of the grant of the patent:
**22.01.92 Bulletin 92/04**

(84) Designated Contracting States:
**BE CH DE FR GB IT LI NL SE**

(56) References cited:
**EP-A- 0 075 897**
**EP-A- 0 095 109**
**EP-A- 0 140 059**

**JIS-B-8302 (Japanese Industry Standard)**

(73) Proprietor: **KANEGAFUCHI KAGAKU KOGYO KABUSHIKI KAISHA**
**2-4 Nakanoshima 3-chome**
**Kita-ku Osaka-shi Osaka-fu(JP)**

(72) Inventor: **Nakamura, Kyoichi**
**5-102, 5-1, Chuo Shitte Kamisu-cho**
**Kashima-gun Ibaraki-ken(JP)**
Inventor: **Yoshida, Hiroyujki**
**108, Irie Haitsu, 3-8-6**
**Nonoue, Akashi-shi Hyogo-ken(JP)**

(74) Representative: **Türk, Dietmar, Dr. rer. nat. et al**
**Türk, Gille + Hrabal Patentanwälte Brucknerstrasse 20**
**W-4000 Düsseldorf 13(DE)**

**Description**

The present invention relates to a process for preparing pre-expanded particles of a thermoplastic resin, and more particularly it relates to a process for preparing pre-expanded particles of a thermoplastic resin which comprises releasing into a low pressure zone a mixture of water and thermoplastic resin particles containing a volatile blowing agent, said mixture being maintained at an elevated temperature under pressure in a pressure vessel, the obtained resin particles being capable of giving molded articles having small shrinkage and excellent surface appearance.

As to a process for pre-expanding thermoplastic resin particles, it is described in JP-A-197027/1983 that a volatile blowing agent is impregnated into thermoplastic resin particles dispersed into water under pressure by heating in a pressure vessel and the mixture of the thermoplastic resin particles and water is released into a low pressure zone through an orifice plate under a vapor pressure of the volatile blowing agent to pre-expand the thermoplastic resin particles. However, the pre-expanded particles obtained by the method described therein are fine in a cell diameter.

When the expansion molding is carried out by using the pre-expanded particles having fine cell diameters, the obtained molded articles are large in shrinkage. Also, when the pre-expansion is carried out by using thermoplastic resin having small diameters, there is a tendency that the obtained preexpanded particles are small in a cell diameter and therefore the articles obtained by molding pre-expanded particles are large in shrinkage.

Also, as to another process for pre-expanding particles of thermoplastic resins, there have hitherto been adopted processes disclosed in, for instance, JP-B- 1344/1981 and DE-A-2,107,683, and there have been obtained pre-expanded particles which can be used in expansion molding in a mold by means of the above process.

However, the cells of the pre-expanded thermoplastic resin particles prepared by the above processes have generally a diameter of not more than 150 $\mu$m. When the expansion molding is carried out in a mold by using the pre-expanded particles having a cell diameter of not more than 150 $\mu$m, the obtained molded articles have defects that the shrinkage is large and their shapes are strained, which are generally known as "shrinkage or depression" or "camber" in the art. Accordingly, the value of products and the productivity of the molded articles are low.

EP-A-0 095 109 discloses a process for the preparation of pre-expanded polyolefin particles wherein a mixture of water and polyolefin particles impregnated with a blowing agent in a pressure vessel is released into a low-pressure zone through at least one orifice having an area of 0.07 to 300 mm$^2$. In order to prevent the particles from a contact with one another during the passage throughout, and in order to control the speed of release, according to this reference the mixture is released through a plurality of orifices with small diameter, consequently preventing the particles from blocking.

However, this reference does not discuss the use of a plurality of the orifice plates, still less teach or suggest that the plurality of orifice plates through which the mixture is passed are attached to the releasing pipe in series to the releasing direction of the mixture, thereby improving the quality of the pre-expanded thermoplastic resin particles. Accordingly, the cells of the pre-expanded thermoplastic resin particles prepared by this prior art process have the same small diameters as stated above. Generally it can be said that according to the conventional methods of preparation of thermoplastic resin pre-expanded particles, the cell diameter of the obtained pre-expanded particles is small. When expansion molding in a mold using such pre-expanded particles is carried out, the obtained foams are large in shrinkage and are strained in shape. Accordingly, the value of the products is lowered, for instance the foam is worse in appearance.

Therefore it is the object of the present invention to provide a process for preparing pre-expanded thermoplastic resin particles, which can increase qualities of the foam and of the molded articles prepared from the pre-expanded particles by making their cell diameter large.

The above and other objects of the present invention will become apparent from the description hereinafter.

The above object of the invention can be achieved with a process for preparing pre-expanded particles of a thermoplastic resin which comprises releasing a mixture of water and thermoplastic resin particles containing a volatile blowing agent into a low pressure zone, said mixture being maintained at an elevated temperature under pressure in a pressure vessel, which is characterized by releasing said mixture through a plurality of orifice plates each having at least one hole attached to the releasing pipe in series to the releasing direction of the mixture and/or an orifice member having at least one orifice having an average diameter of 2 to 10 mm and a ratio of the length to the everage diameter of 4 to 100.

Preferred embodiments of the invention are described in the subclaims following below.

According to the present invention, there can be obtained pre-expanded thermoplastic resin particles having cells which are uniform in diameter, and whose average diameter is from 1.3 to 2 times larger than that of cells of the pre-expanded particles prepared by means of conventional methods or not less than 150 μm. The molded articles prepared from the pre-expanded particles obtained by the process of the present invention are small in shrinkage and excellent in surface appearance.

Fig. 1 is a front view showing an embodiment of an orifice member in accordance with the present invention;

Fig. 2 is a cross-sectional view of Fig. 1 along the line A-B;

Fig. 3 is a schematic view showing an embodiment of a preparing apparatus used in the process of the present invention;

Fig. 4 is a view showing cross sectional shape of the molded article used for measuring the strain of the molded article;

Fig. 5 is an another schematic view showing an embodiment of a preparing apparatus used in the process of the present invention; and

Fig. 6 is a section view of a releasing pipe provided with a plurality of orifice plates.

The cells of the pre-expanded thermoplastic resin particles obtained by the process of the present invention have a diameter of not less than 150 μm or their diameters are from 1.3 to 2 times larger than those of the pre-expanded particles prepared according to conventional methods. When the expansion molding in a mold is carried out by using the pre-expanded particles obtained according to the present invention, the dimensional shrinkage of the obtained molded articles is about 2 % smaller than that of the molded articles obtained by conventional pre-expanding methods. Therefore, the obtained molded articles are small in the dimensional shrinkage and are excellent in the surface, and the above-mentioned disadvantages can be solved.

Examples of the thermoplastic resin used in the invention are, for instance, styrene polymers such as polystyrene, poly-α-methylstyrene, a copolymer of styrene and maleic anhydride, a blend of polyphenyleneoxide and polystyrene, a graft-copolymer of polyphenyleneoxide and polystyrene, a copolymer of acrylonitrile and styrene, a terpolymer of acrylonitrile, butadiene and styrene, a copolymer of styrene and butadiene, and a high impact polystyrene; vinyl chloride polymers such as polyvinyl chloride, a copolymer of vinyl chloride and vinyl acetate, a chlorinated polyvinyl chloride, and a copolymer of an olefin such as ethylene or propylene and vinyl chloride; polyamides, polyester resins, and polyolefin resins.

Among them, the present invention is particularly suitable for pre-expansion of polyolefin resins, the resins having a large gas permeability and a glass transition point of less than room temperature and their molded articles being easily shrunk or easily strained in a shape upon expansion molding in a mold.

Examples of the polyolefin resins are, for instance, polypropylene resins such as a random-copolymer of ethylene and propylene, a random-terpolymer of ethylene, propylene and butene, a block-copolymer of ethylene and propylene and homopolypropylene, polyethylene resins such as a low density polyethylene, a medium density polyethylene, a high density polyethylene, a linear low density polyethylene, a copolymer of ethylene and vinyl acetate, a copolymer of ethylene and methyl methacrylate, an ionomer resin such as an ionomer resin of ethylene-methacrylic acid copolymer crosslinked with a metal ion in its molecule; another polyolefin resins such as poly-l-butene, polypentene, a terpolymer of ethylene, and acrylic acid and maleic anhydride. The polyolefin resins may be used alone or in admixture thereof, and they may be used in the state of not only non-crosslinked resin but also crosslinked resin prepared by using peroxide or radiation.

Usually, the thermoplastic resins are previously melted by using an extruder, a kneader, a Banbury mixer, or a roll, and are molded into particles having a desired shape such as a cylinder, a cylindroid, a sphere, a cube or a rectangular parallelepiped, and having an average particle diameter of from 0.1 to 10 mm, preferably from 1 to 5 mm, in order to easily utilize for pre-expansion. The term "average particle diameter" as shown herein is the diameter of a sphere.

In the invention, examples of the volatile blowing agent contained into the thermoplastic resin are, for instance, aliphatic hydrocarbons such as propane, butane, pentane and hexane; alicyclic hydrocarbons such as cyclopentane and cyclobutane; halogenated hydrocarbons such as trichloromonofluoromethane, dichlorodifluoromethane, dichlorotetrafluoroethane, trichlorotrifluoroethane, methyl chloride, methylene chloride and ethyl chloride. The blowing agent may be used alone or in admixture thereof. The amount of the blowing agent used is not particularly limited and is suitably decided according to the desired expansion ratios of the pre-expanded particles of the thermoplastic resin. Usually, the amount of the blowing agent is from 5 to 50 parts by weight per 100 parts by weight of the thermoplastic resin.

At that time, a dispersing agent can be used. Examples of the dispersing agent are, for instance, basic calcium tertiary phosphate, basic magnesium carbonate, basic zinc carbonate, calcium carbonate, and in addition thereto, a slight amount of a surface active agent such as sodium dodecylbenzenesulfonate, sodium n-paraffinicsulfonate or sodium $\alpha$-olefinsulfonate, as a dispersing assistant. The amount of the dispersing agent used depends on the kinds of the dispersing agents and the thermoplastic resins and the amounts of the thermoplastic resin particles. Usually, the amount is from 0.2 to 3 parts by weight per 100 parts by weight of water.

It is preferable to use the thermoplastic resin particles containing the volatile blowing agent in an amount of 20 to 100 parts by weight per 100 parts by weight of water in order to satisfy the dispersibility in water.

Any pressure vessels are applicable to the invention so long as the vessel can satisfactorily withstand the above-mentioned pressure and heating conditions. Examples of the pressure vessel are, for instance, an autoclave, and the like.

As aforementioned, the aqueous dispersion is heated under pressure in the pressure vessel. The pressure is usually from 1,6 to 5,1 MPa (15 to 50 kg/cm$^2$G) The heating temperature depends on the kinds of the thermoplastic resin and is usually within the range of 90$^\circ$ to 180$^\circ$C. The dispersinon heated at the predetermined temperature is maintained for 20 to 60 minutes.

The thus obtained aqueous dispersion is released into a low pressure zone through at least one means selected from the group consisting of a plurality of orifice plates in series to the direction of releasing the mixture and an orifice having a ratio of the length to the average diameter of 4 to 100, thereby pre-expanding the thermoplastic resin particles to give the pre-expanded particles of the thermoplastic resin.

When the release of the thermoplastic resin particles is carried out through not less than 2 of the orifice plates, there can be obtained the pre-expanded particles having a large average cell diameter, but even if the release is carried out through not less than 5 of the orifice plates, the effect that the cell diameters are made large is not very increased. Accordingly, it is preferable that the number of the orifice plates are from 2 to 4.

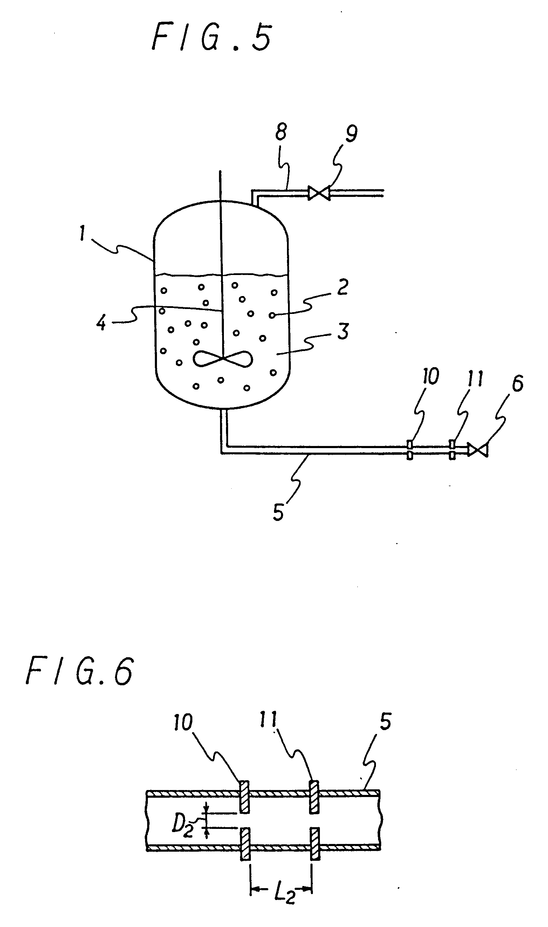

The hole size of the orifice plates ($D_2$) shown in Fig. 6 depends on the diameter or shapes of the thermoplastic resin particles and is not absolutely decided. It is preferable that the hole size ($D_2$) is larger than the diameter of the thermoplastic resin particles before pre-expansion, that is, before releasing into a low ressure zone, the diameter being calculated in their sphere volume, and is smaller than 0.8 time in length of the inside diameter of the releasing pipe. When the hole size ($D_2$) is smaller than the diameter of the thermoplastic resin particles in the state of non-expansion, it is easy to plug the hole of the orifice plates. On the other hand, when the hole size ($D_2$) is larger than 0.8 time in length of the inside diameter of the releasing pipe, the effect that cell diameter of the pre-expanded particle are made large is not increased.

The orifice plate have one or more holes, and it is preferable to use the orifice plates having a plurality of holes, since the production rate can be increased. The holes of the orifice plate can have any shapes such as a circle, an oval and a polygon. Usually, the orifice plates having the circular hole are used since the shape can be easily formed.

The orifice plates are generally attached to a releasing pipe 5 at a position between a pressure vessel 1 and a releasing valve 6 as shown in Fig. 5, but the valve 6 may be provided to a position between the pressure vessel 1 and the orifice plate 10, or a position between the orifice plates 10 and 11.

As shown in Fig. 6, the plural orifice plates 10 and 11 are attached to the releasing pipe 5 in series to the direction releasing of the mixture, and it is preferable that the space $L_2$ between the orifice plates is from 5 to 1,000 mm. When the space $L_2$ is less than 5 mm, the average cell diameter of the pre-expanded particles are the same as that of the pre-expanded particles prepared by the conventional methods. When the space $L_2$ is more than 1,000 mm, it is easy to plug the hole of the orifice plate 11 provided at the rear of the orifice plate 10 by the thermoplastic resin particles.

As the orifice plate used in the present invention, any plates such as an orifice type, a nozzle type and a Venturi type can be used. These orifice plates may be used alone or in admixture thereof.

The process for preparing the pre-expanded thermoplastic resin particles of the present invention is more specifically explained by means of Figs. 5 and 6,.

Fig. 5 is a schematic view showing an embodiment of a preparing apparatus used in the invention. The thermoplastic resin particles, and the blowing agent are added into the pressure vessel 1 such as the autoclave together with a small amount of dispersing agent and water 3, and the mixture is dispersed with a stirrer 4. The pressure vessel 1 is heated to the predetermined temperature under the predetermined pressure, and is maintained for a prescribed period of time. The aqueous dispersion of the thermoplastic resin particles containing the volatile blowing agent 2 in the pressure vessel 1 is then released through the plural orifice plates 10 and 11 attached to the releasing pipe 5 in series to the direction releasing of the dispersion into a low pressure zone (usually, atmospheric pressure) by opening the releasing valve 6 to give the pre-expanded thermoplastic resin particles. A pipe 8 is a pipe for introducing the volatile blowing agent added for maintaining the inner pressure of the pressure vessel 1 at a pressure equal to the vapor pressure of the blowing agent before releasing during releasing the aqueous dispersion. A valve 9 is a valve for introducing the volatile blowing agent.

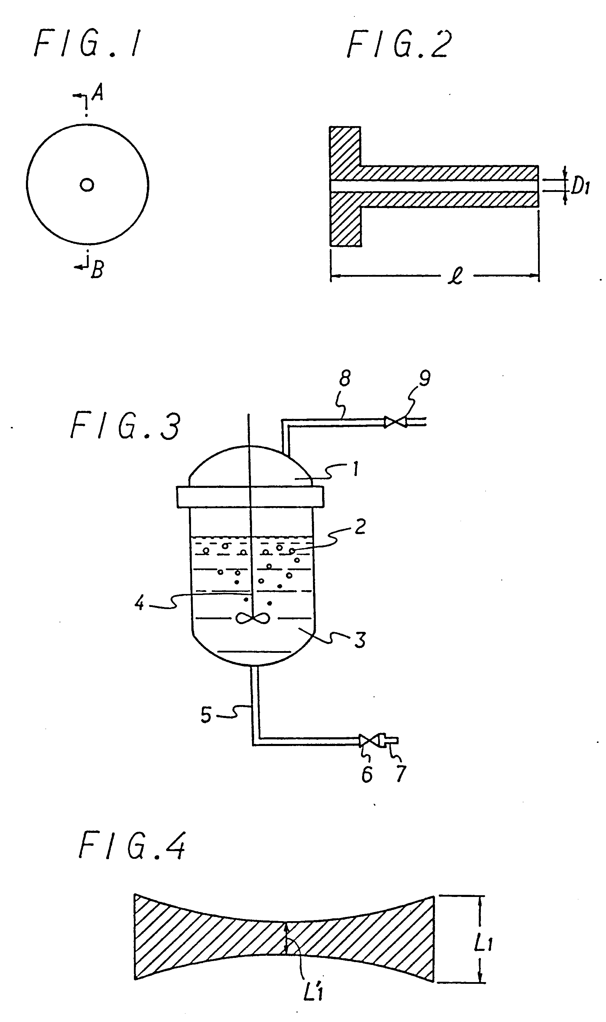

As the orifice having the ratio of the length to the average diameter of 4 to 100, there can be used, for instance, an orifice member having a shape shown in Fig. 1 as a front view and in Fig. 2 as a sectional view. In Fig. 2, $\ell$ shows the length of the orifice and $D_1$ shows the average diameter of the orifice. The orifice member is provided in front of the releasing valve 6 in an apparatus for preparing the pre-expanded thermoplastic resin particles as shown in Fig. 3. The valve 6 may be provided at any parts of the releasing pipe 5 so long as the die is attached to the outlet of the releasing pipe 5. Also, the orifice may be directly provided at an outlet of the pressure vessel 1.

When the orifice has a ratio of the length ($\ell$) to the average diameter ($D_1$) of from 4 to 100, the cells of the obtained pre-expanded particles are uniform in diameter and have an average diameter of not less than 150 $\mu$m. When the ratio is less than 4, the obtained pre-expanded particles has a cell diameter of not more than 150 $\mu$m. On the other hand, when the ratio is more than 100, though the obtained pre-expanded particles have a cell diameter of not less than 150 $\mu$m, cells which are ununiform in a diameter increase and expansion ratio varies widely. When the ratio of the length ($\ell$) to the average diameter ($D_1$) is from 10 to 40, the obtained pre-expanded particles have cells which have an average diameter of not less than 230 $\mu$m and are uniform. The average diameter of the orifice varies depending on amounts of the thermoplastic resin particles pre-expanded and sizes of the thermoplastic resin particles dispersed in water before pre-expanding. Usually, the average hole size is from 2 to 10 mm.

The orifice can have any shapes. Examples of the shapes are, for instance, a circle, a polygon such as a triangle, a quadrilateral or a pentagon, a star shape, an oval, a rectangle, or an interminate form. Accordingly, the term "average diameter" of the orifice used herein is expressed by the diameter of a circle having the same cross sectional area as that of the orifice.

The orifice member has usually one orifice, but can also have two or more orifices. It is preferable to use the orifice member having a purality of the orifices, since the production rate can be increased with maintaining the same cell diameter and cell structure of the pre-expanded particles as in case of using the orifice member having one orifice.

The orifice member is prepared from any materials such as metals and nonmetals so long as the materials can withstand the pressure and temperature conditions upon pre-expanding the thermoplastic resin particles. From the point of the economy and durability, it is preferable to prepare the die from stainless steel or ceramics.

The process for preparing the pre-expanded thermoplastic resin particles of the present invention is more specifically explained by means of Figs. 1 to 3.

Fig. 3 is a schematic view showing an embodiment of a preparing apparatus used in the invention. The thermoplastic resin particles, and the blowing agent are added into the pressure vessel 1 such as the autoclave together with a small amount of dispersing agent and water 3, and the mixture is dispersed with a stirrer 4. The pressure vessel 1 is heated to the predetermined temperature under the predetermined pressure, and is allowed for a prescribed period of time. The aqueous dispersion of the thermoplastic resin particles containing the volatile blowing agent 2 in the pressure vessel 1 is then released through the orifice member 7 attached to the outlet of the releasing pipe 5 into a low pressure zone (usually, atmospheric pressure) by opening the releasing valve 6 to give the pre-expanded thermoplastic resin particles having cells which are uniform and have an average diameter of not less than 150 $\mu$m. The average diameter of the orifice ($D_1$) is smaller than the diameter of the releasing pipe 5. A pipe 8 is a pipe for introducing the volatile blowing agent added for maintaining the inner pressure of the pressure vessel 1 at a pressure equal to the vapor pressure of the blowing agent before releasing during releasing the aqueous dispersion. A valve 9 is an introducing valve of a volatile blowing agent.

The pre-expanded thermoplastic resin particles obtained according to the present invention have usually a ratio of closed cells of not less than 80 %. If necessary, the pre-expanded particles are heated under pressure for a prescribed period of time in the pressure vessel to impregnate with air into the pre-expanded particles. Then, the pre-expanded particles are charged into a mold which is able to be closed but unable to be sealed, in other words, a mold which is able to be closed but is permeable, and are molded by heating with steam to give a formed article having the same shape as the mold.

The thus obtained foamed articles are small in the shrinkage and the shape distortion, and are excellent in the surface appearance. Accordingly they are of great value of products.

The present invention is more specifically described and explained by means of the following Examples and Comparative Examples in which all % and parts are by weight unless otherwise noted.

Examples 1 to 7 and Comparative Examples 1 to 4

A pressure vessel was charged with 100 parts of pellets of random copolymer of ethylene and propylene (commercially available under the commercial name "Noblen" made by Sumitomo Kagaku Kogyo Kabushiki Kaisha, ethylene content: 4.5 %, a weight: about 1.3 mg/pellet), 35 parts of dichlorodifluoromethane, 1.5 parts of basic calcium tertiary phosphate powder and 0.006 part of sodium n-paraffinicsulfonate as dispersing agents and 300 parts of water, and the temperature of the mixture was raised to 136°C with stirring. At that time, the inner pressure of the vessel was about 3,05 MPa (29.5 kg/cm²G (gauge pressure, hereinafter the same)).

Then, a valve provided at a lower part of the vessel was opened to release the aqueous dispersion into an atmosphere of ordinary pressure through an orifice having the ratio of the length to the average diameter shown in Table 1. During the release, the inner pressure of the vessel was maintained at 3,05 to 3,10 MPa (29.5 to 30.0 kg/cm²G) by supplying dichlorodifluoromethane. The thus obtained pre-expanded particles had an expansion ratio of about 37 to about 40.

The pre-expanded particles were impregnated with air at 80°C for 3.5 hours under a pressure of 0,95 MPa (8.5 kg/cm²G)(in air) to adjust the inner pressure of the pre-expanded particles of about 0,2 to about 0,25 MPa (2.0 to about 2.5 atm.), and filled in a plank mold having dimensions of 290 mm x 270 mm x 50 mm and heated for 20 seconds to 3 minutes by steam having a pressure of about 0,3 MPa (2.0 kg/cm²G) to give a molded articles.

An average cell size, a uniformity of cells, a dimensional shrinkage of molded article and a strain of shape of molded article are measured as follows:

[Average cell diameter]

There are randomly picked out 30 pieces of pre-expanded particles from the obtained particles and a cell diameters are measured according to Japanese Industrial Standard (JIS) K 6402. An average diameter of cells (d) is calculated from the above values.

[Uniformity of cell diameter]

A percentage of the average cell diameter to the standard deviation showing scatter of cell diameters is calculated as follows:

U (%) = ($\sigma$/ d) x 100

wherein d is an average diameter of cells, $\sigma$ is a standard deviation showing scatter of cell diameters, and U is a percentage of $\sigma$/d. The smaller the value of U, the more uniform the cell diameter. The uniformity is estimated as follows:

    ◯ :      U is less than 35 %  
    △ :      U is from 35 % to 45 %  
    ✕ :      in is more than 45 %

[Dimensional shrinkage of molded article]

The shrinkage is calculated as follows:

$$\text{Shrinkage (\%)} = \left(1 - \frac{\text{Dimension of the obtained molded article (mm)}}{\text{Dimension of the mold (mm)}}\right) \times 100$$

    ◯ :      The shrinkage is less than 3 %  
    △ :      The shrinkage is from 3 to 5 %  
    ✕ :      The shrinkage is more than 5 %

[Strain of shape of molded article]

6

$$S\ (\%)\ =\ (1\ -\ \frac{L_1'}{L_1})\ x\ 100$$

wherein S is a strain, and $L_1$ is a maximum thickness and $L_1'$ is a minimum thickness of the molded article as shown in Fig. 4.

○ :      S is less than 3 %
△ :      S is from 3 to 5 %
X :      S is more than 5 %

Table 1

| Ex. No. | Length to average diameter* of an orifice | Average cell diameter (μm) | Uniformity of cells | Dimensional shrinkage of molded article | Strain of shape of molded article |
|---|---|---|---|---|---|
| Ex.1 | 4.0 | 214 | ○ | ○ | ○ |
| Ex.2 | 5.0 | 225 | ○ | ○ | ○ |
| Ex.3 | 10.0 | 246 | ○ | ○ | ○ |
| Ex.4 | 20 | 271 | ○ | ○ | ○ |
| Ex.5 | 40 | 296 | ○ | ○ | ○ |
| Ex.6 | 60 | 302 | △ | ○ | ○ |
| Ex.7 | 100 | 311 | △ | ○ | ○ |
| Com. Ex.1 | 0.6 | 186 | ○ | × | × |
| Com. Ex.2 | 1.0 | 192 | ○ | × | × |
| Com. Ex.3 | 150 | 321 | × | ○ | △ |
| Com. Ex.4 | 200 | 328 | × | ○ | △ |

\* An average orifice diameter was 4 mm

As shown in Table 1, it was recognized that all of the molded articles obtained in Examples 1,to 7 had excellent quality, that is, they had small dimensional shrinkages and were not strained in their state. On the other hand, the molded articles obtained in Comparative Examples 1 and 2 which were pre-expanded through an orifice having a ratio of the length to the average diameter of not more than 4 were large in the dimensional shrinkage and were remarkably strained since the pre-expanded particles had the average cell diameter of not more than 150 μm, and the molded article obtained in Comparative Examples 3 and 4 which were pre-expanded through an orifice member having a ratio of the length to the average diameter of not less than 100 were small in the dimensional shrinkage since the pre-expanded particles had the average cell diameter of not less than 150 $\mu$m, but they were poor in the uniformity of cells and accordingly were strained in their states.

According to the present invention, the pre-expanded particles having cells which are uniform in diameter and have the average diameter of not less than 150 $\mu$m can be obtained, and therefore the articles prepared by molding in a mold from the pre-expanded particles are small in the shrinkage and strain, are excellent in the appearance, and are increased in the productivity. Accordingly, the molded articles prepared are utilizable for use of shock absorbing, wrapping materials or structural material such as impact-absorbing materials for cars which requires excellent dimensional precision and heat insulating building materials.

Example 8

A four liter pressure vessel was charged with 100 parts of linear low density polyethylene pellets containing 0.01 part of talc (weight: about 4 mg/pellet, resin density: 0.920 g/cm$^3$, melt index: 0.8 g/10 minutes, comonomer: 1-butene), 1.2 parts of basic calcium tertiary phosphate, 0.006 part of sodium n-paraffinic sulfonate and 300 parts of water, to which 30 parts of dichlorodifluoromethane was added with stirring, and the temperature of the dispersion was raised to 114$^{\circ}$C. There was further added dichlorodifluoromethane to the dispersion with maintaining the temperature of 114$^{\circ}$C to raise the inner pressure of the vessel of 2,8 MPa (27 kg/cm$^2$G.) The impregnation of dichlorodifluoromethane attained equilibrium while maintaining the inner pressure of the vessel at 2,8 MPa (27 kg/cm$^2$G) by supplying dichlorodifluoromethane since the inner pressure lowered with impregnating the polyethylene pellets with dichlorodifluoromethane. Then, a valve jointed to a releasing pipe (an inner diameter: 2,54 cm (1 inch) provided at a low part of the vessel was opened to release the mixture of the polyethylene pellets and water into an atmosphere of ordinary pressure through two orifice plates attached to the releasing pipe in series to the releasing direction of the mixture to pre-expand the polyetylene pellets. Each of two orifice plates used had a single orifice having an inner diameter of 4 mm and they were attached to the releasing pipe so that the space thereof was 140 mm. The thus obtained pre-expanded particles had an average expansion ratio of 28 and an average cell diameter of 410 $\mu$m.

The pre-expanded particles were dried and aged at 35$^{\circ}$C for 24 hours, and filled in a plank mold having dimensions of 290 mm x 270 mm x 50 mm. The particles were heated for 20 seconds to 2 minutes by steam of about 0,2 MPa (1 kg/cm$^2$G) to prepare a molded article. The molded article was dried and aged at 80$^{\circ}$C for 24 hours, and allowed to stand at room temperature for 6 hours.

With respect to the obtained molded article, the dimensional shrinkage and surface appearance were measured. The results are shown in Table 2.

[Surface appearance]

The surface of the molded article was observed with the naked eye as to the adhesion between expanded particles and the surface smoothness.

(Estimation)

O :    The surface is smooth.
X :    The surface is uneven.

Comparative Example 5

Pre-expanded particles were prepared in the same manner as in Example 8 except that the mixture was released through one orifice plate into an atmosphere of ordinary pressure. The obtained pre-expanded particles had an average expansion ratio of 25 and an average cell diameter of 264 $\mu$m.

The pre-expanded particles were subjected to molding in the same manner as in Example 8. The quality of the molded article was estimated.

The results are shown in Table 2.

Example 9

The pre-expanded particles were prepared in the same manner as in Example 8 except that a linear low dencity polyethylene pellets containing 0.01 part of talc whose diameter was smaller than that of the polyethylene pellets used in Example 8 (weight: about 2 mg/pellet, resin density: 0.919 g/cm³, melt index: 1.0 g/10 minutes, comonomer: 1-butene) was used, a temperature in the pressure vessel was elevated to 117°C an inner pressure of the pressure vessel was maintained at 3,1 MPa (30 kg/cm²G,), and the space between two orifice plates was 300 mm. The obtained pre-expanded particles had an average expansion ratio of 25 and an average cell diameter of 174 μm.

The pre-expanded particles were subjected to molding in the same manner as in Example 8. The quality of the molded article was estimated.

The results are shown in Table 2.

Comparative Example 6

Pre-expanded particles were prepared in the same manner as in Example 9 except that the mixture was released through one orifice plate into an atmosphere of ordinary pressure. The obtained pre-expanded particles had an average expansion ratio of 22 and an average cell diameter of 134 μm.

The pre-expanded particles were subjected to molding in the same manner as in Example 8. The quality of the molded article was estimated.

The results are shown in Table 2.

Example10

The pre-expanded particles were prepared in the same manner as in Example 8 except that ethylenepropylene random copolymer pellet (weight: about 2 mg/pellet, ethylene content: 4.5 %) were used instead of polyethylene pellets, the temperature in the pressure vessel was elevated to 137°C and the inner pressure of the pressure vessel was maintained at 3,2 MPa (31 kg/cm²G). The obtained pre-expanded particles had an average expansion ratio of 43 and an average cell diameter of 203 μm.

The pre-expanded particles were impregnated with air at 80°C for 3.5 hours under a pressure of 0,95 MPa (8.5 kg/cm²G)(in air) to adjust an inner pressure of the particles from 0,18 to 0,23 MPa (1.8 to 2.3 atm), and filled in a plank mold having dimensions of 290 mm x 270 mm x 50 mm. The particles were heated for 20 seconds to 3 minutes by steam of about 0,3 MPa (2 kg/cm²G) to prepare a molded articles. The molded article was dried and aged at 70°C for 16 hours and allowed to stand at room temeprature for 2 hours. The quality of the molded article was estimated.

The results are shown in Table 2.

Comparative Example 7

Pre-expanded particles were prepared in the same manner as in Example 10 except that the mixture was released through one orifice plate into an atmosphere of ordinary pressure The obtained pre-expanded particles had an average expansion ratio of 41 and an average cell diameter of 138 μm.

The pre-expanded particles were subjected to molding in the same manner as in Example 10. The quality of the molded article was estimated.

The results are shown in Table 2.

Table 2

| Ex. No. | Average cell diameter of pre-expanded particles (μm) | Dimensional shrinkage of the molded article | Surface appearance of the molded article |
|---------|------------------------------------------------------|---------------------------------------------|------------------------------------------|
| Ex.8 | 410 | ○ | ○ |
| Ex.9 | 174 | △ | ○ |
| Ex.10 | 203 | ○ | ○ |
| Com. Ex.5 | 264 | X | X |
| Com. Ex.6 | 134 | X | X |
| Com. Ex.7 | 138 | X | X |

As shown in Table 2, all of the pre-expanded particles obtained in Examples 8 to 10 had large average cell diameters compared to those obtained in Comparative Examples 5 to 7, that is, according to conventional methods. Accordingly, the molded articles obtained in Examples 8 to 10 were small in the dimensional shrinkage compared with Comparative Examples 5 to 7. Also, the molded articles obtained in Examples 8 to 10 were excellent in the surface smoothness and adhesion between expanded particles compared to those obtained in Comparative Examples 5 to 7.

According to the process of the present invention, the average cell diameter of the obtained pre-expanded particles is larger than that of the pre-expanded particles obtained by means of conventional methods. Therefore, the molded articles prepared from the pre-expanded particles according to the present invention by expansion molding in a mold are small in dimensional shrinkage and excellent in surface appearance, and are utilizable for use of shock absorbing, wrapping materials or structural materials such as impact-absorbing materials for cars which requires excellent dimensional precision and heat insulating building materials.

## Claims

1. A process for preparing pre-expanded particles of a thermoplastic resin which comprises releasing into a low pressure zone a mixture of water and thermoplastic resin particles containing a volatile blowing agent, said mixture being maintained at an elevated temperature under pressure in a pressure vessel, characterized by releasing said mixture through a plurality of orifice plates each having at least one hole attached to the releasing pipe in series to the releasing direction of the mixture and/or an orifice member having at least one orifice having an average diameter of 2 to 10 mm and a ratio of the length to the average diameter of 4 to 100.

2. The process of Claim 1, wherein said thermoplastic resin is a polyolefin resin.

3. The process of Claim 2, wherein said polyolefin resin is polypropylene resin.

4. The process of Claim 2, wherein said polyolefin resin is polyethylene resin.

5. The process of Claim 1, wherein said orifice plate is at least one member selected from the group consisting of an orifice type plate, a nozzle type plate and a Venturi type plate.

6. The process of Claim 1, wherein said orifice has a ratio of the length to the average diameter of 10 to 40.

7. The process of Claim 1, wherein said orifice plate has plural holes.

8. The process of Claim 1, wherein said dispersion is released through an orifice member having plural orifices.

9. The process of Claim 1, wherein the space between each two adjacent orifice plates is from 5 to 1,000 mm.

10. The process Of Claim 1, wherein each of said orifice plates has a hole having a diameter between larger than the diameter of said thermoplastic resin particle before releasing and smaller than 0.8 times the length of the inside diameter of said releasing pipe.

11. The process of Claim 1, wherein said orifice member is attached to an outlet of said releasing pipe.

12. The process of Claim 1, wherein said orifice member is attached to an outlet of said pressure vessel.

## Revendications

1. Un procédé pour prépare des particules pré-expansées en résine thermoplastique dans lequel on évacue dans une zone à basse pression un mélange d'eau et de particules en résine thermoplastique renfermant un agent gonflant volatil, ledit mélange étant maintenu à température élevée sous pression dans un récipient à pression, caractérisé en ce que l'on évacue ledit mélange à travers une pluralité de plaques perforées, présentant chacune au moins un trou, fixées à la canalisation d'évacuation en série dans la direction d'évacuation du mélange et/ou un élément perforé présentant au moins un orifice possédant un diamètre moyen de 2 à 10 mm et un rapport entre sa longueur et son diamètre moyen de 4 à 100.

2. Le procédé de la revendication 1, dans lequel ladite résine thermoplastique est une résine polyoléfinique.

3. Le procédé de la revendication 2, dans lequel ladite résine thermoplastique est une résine de polypropylène.

4. Le procédé de la revendication 2, dans lequel ladite résine polyoléfinique est une résine de polyéthylène.

5. Le procédé de la revendication 1, dans lequel ladite plaque perforée est au moins un élément choisi dans le groupe constitué par une plaque du type à orifice, une plaque du type à buse et une plaque du type Venturi.

6. Le procédé de la revendication 1, dans lequel ledit orifice présente un rapport entre sa longueur et son diamètre moyen de 10 à 40.

7. Le procédé de la revendication 1, dans lequel la plaque perforée possède plusieurs trous.

8. Le procédé de la revendication 1, dans lequel ladite dispersion est évacuée à travers un élément perforé présentant plusieurs orifices.

9. Le procédé de la revendication 1, dans lequel la distance entre deux plaques perforées adjacentes est de 5 à 1000 mm.

10. Le procédé de la revendication 1, dans lequel chacune desdites plaques perforées présente un trou possédant un diamètre plus important que le diamètre desdites particules de résine thermoplastique avant l'évacuation et plus petit que 0,8 fois la longueur du diamètre interne de ladite canalisation d'évacuation.

11. Le procédé de la revendication 1, dans lequel ledit élément perforé est fixé à une sortie de ladite canalisation d'évacuation.

12. Le procédé de la revendication 1, dans lequel ledit élément perforé est fixé à une sortie dudit récipient à pression.

**Patentansprüche**

1. Verfahren zur Herstellung von vorexpandierten Teilchen aus einem thermoplastischen Harz, das umfaßt die Freisetzung einer Mischung aus Wasser und thermoplastischen Harzteilchen, die ein flüchtiges Treibmittel enthalten, in eine Niederdruckzone, wobei die Mischung in einem Druckbehälter bei einer erhöhten Temperatur und unter Druck gehalten wird, dadurch **gekennzeichnet,** daß die Mischung durch eine Vielzahl von Lochplatten freigesetzt wird, die jeweils mindestens ein Loch aufweisen, die nacheinander in Richtung der Freisetzung der Mischung an das Freisetzungsrohr und/oder ein Lochelement mit mindestens einem Loch mit einem durchschnittlichen Durchmesser von 2 bis 10 mm und einem Verhältnis von Länge zu durchschnittlichem Durchmesser von 4 bis 100 angeschlossen werden.

2. Verfahren nach Anspruch 1, worin das thermoplastische Harz ein Polyolefinharz ist.

3. Verfahren nach Anspruch 2, worin das Polyolefinharz ein Polypropylenharz ist.

4. Verfahren nach Anspruch 2, worin das Polyolefinharz ein Polyethylenharz ist.

5. Verfahren nach Anspruch 1, worin die Lochplatte mindestens ein Element darstellt, das ausgewählt wird aus der Gruppe, die besteht aus einer Platte vom Loch-Typ, einer Platte vom Düsen-Typ und einer Platte vom Venturi-Typ.

**6.** Verfahren nach Anspruch 1, worin das Loch ein Verhältnis von Länge zu durchschnittlichem Durchmesser von 10 bis 40 aufweist.

**7.** Verfahren nach Anspruch 1, worin die Lochplatte eine Vielzahl von Löchern besitzt.

**8.** Verfahren nach Anspruch 1, worin die Dispersion durch ein Lochelement mit einer Vielzahl von Löchern freigesetzt wird.

**9.** Verfahren nach Anspruch 1, worin der Zwischenraum zwischen jeweils zwei benachbarten Lochplatten 5 bis 1 000 mm beträgt.

**10.** Verfahren nach Anspruch 1, worin jede der Lochplatten ein Loch mit einem Durchmesser aufweist, der größer ist als der Durchmesser des thermoplastischen Harzteilchensvor der Freisetzung und kleiner ist als das 0,8-fache der Menge des Innendurchmessers des Freisetzungsrohres.

**11.** Verfahren nach Anspruch 1, worin das Lochelement an einen Auslaß des Freisetzungsrohres angeschlossen ist.

**12.** Verfahren nach Anspruch 1, worin das Lochelement an einen Auslaß des Druckbehälters angeschlossen ist.

# FIG.1

# FIG.2

# FIG.3

# FIG.4

# $F I G . 5$

# $F I G . 6$